# EUROPEAN PATENT SPECIFICATION

(11) **EP 4 030 943 B1**
(45) Date of publication and mention of the grant of the patent: **25.03.2026**
(21) Application number: 20788715.9
(22) Date of filing: 18.09.2020
(51) Int. Cl.: A24F 40/42, A24F 40/465, A24F 40/51

(54) **A CONSUMABLE ARTICLE FOR USE WITH AN APPARATUS FOR HEATING AEROSOLISABLE MATERIAL**
VERBRAUCHSMATERIAL ZUR VERWENDUNG MIT EINEM GERÄT ZUM HEIZEN VON AEROSOLISIERBAREM MATERIAL
ARTICLE CONSOMMABLE À UTILISER AVEC UN APPAREIL DE CHAUFFAGE DE MATIÈRES AÉROSOLISABLES

(30) Priority: 18.09.2019 GB 201913479
(43) Date of publication of application: 27.07.2022
(73) Proprietor: Nicoventures Trading Limited, London Greater London WC2R 3LA (GB)
(72) Inventor: MOLONEY, Patrick, London Greater London WC2R 3LA (GB); KORUS, Anton, London Greater London WC2R 3LA (GB); CHAN, Justin Han Yang, London Greater London WC2R 3LA (GB)
(74) Representative: Dehns
(86) International application number: PCT/EP2020/076175
(87) International publication number: WO 2021/053184

(56) References cited:
- EP-A1- 3 135 134
- EP-A1- 3 407 943
- EP-B1- 3 135 134
- EP-B1- 3 407 943
- WO-A1-2019/052748
- US-B2- 10 328 443

## Description

### Technical Field

The present invention relates to a consumable article for use with an apparatus arranged to heat aerosolisable material.

### Background

Articles such as cigarettes, cigars and the like burn tobacco during use to create tobacco smoke. Attempts have been made to provide alternatives to these articles, which burn tobacco, by creating products that release compounds without burning. Examples of such products are so-called heat-not-burn products, also known as tobacco heating products or tobacco heating devices, which release compounds by heating, but not burning, the material. The material may be for example tobacco or other non-tobacco products or a combination, such as a blended mix, which may or may not contain nicotine.

US2018297048 discloses a cartridge for an aerosol-generating system, the cartridge including a liquid storage container containing: a first liquid composition and a second composition; a plurality of capsules, each capsule encapsulating the second composition to separate the second composition from the first liquid composition, each capsule including a frangible shell encapsulating the second composition; a capsule retainer; and an outlet in the liquid storage container configured to deliver liquid from the liquid storage container, the capsule retainer substantially preventing any frangible shells, or parts thereof, from exiting the cartridge through the outlet.

### Summary

According to a first aspect of the present invention, there is provided a consumable article according to appended claim 1.

Detection of the detectable element in the first position enables heating and therefore use of new or unspent consumable articles whereas detection that the detectable element is not in the first position, or a lack of detection of a detectable element, prevents heating by the apparatus, in the event that a new or unspent consumable article is not present at all, or that a used or incompatible consumable article is inserted into the apparatus.

According to the invention, use of the consumable article causes the detectable element to be displaced from the first position to the second position.

In an exemplary embodiment, the consumable article comprises a displacement mechanism for displacing the detectable element from the first position to the second position.

In an exemplary embodiment, the displacement mechanism comprises a spring, the spring being pre-tensioned with the detectable element in the first position prior to use of the consumable article and arranged to displace the detectable element to the second position after use of the consumable article.

In an exemplary embodiment, the consumable article comprises a holding mechanism for holding the detectable element in the first position.

In an exemplary embodiment, the holding mechanism comprises a holding material that, in response to being heated, enables the detectable element to be displaced from the first position to the second position.

In an exemplary embodiment, the holding mechanism comprises a wax seal encapsulating the detectable element.

In an exemplary embodiment, wherein the holding material is arranged to soften or melt during use of the consumable article to allow the detectable element to be displaced to the second position.

In an exemplary embodiment, the consumable article comprises a susceptor material that is heatable by penetration with a varying magnetic field to heat the holding material.

In an exemplary embodiment, the holding material is arranged to be heated by heat used to volatilise the at least one component of the aerosolisable material.

In an exemplary embodiment, the holding mechanism comprises a mechanical lock.

In an exemplary embodiment, the mechanical lock is released upon insertion of the consumable article into the apparatus to allow the detectable element to be displaced to the second position.

In an exemplary embodiment, the consumable article comprises a memory arranged to store data indicative of a time elapsed following a first use of the consumable article in an apparatus and/or data indicative of a number of puffs have been drawn from the consumable article.

According to a second aspect of the present invention, there is provided an apparatus arranged to heat aerosolisable material to volatilise at least one component of the aerosolisable material, the apparatus being arranged to:
receive a consumable article comprising the aerosolisable material;
detect a displaceable detectable element in the consumable; and
heat the consumable article based on the detection.

In an exemplary embodiment, the apparatus comprises:
a sensor arranged to detect a signal from the detectable element; and
a controller arranged to apply power to a heater element to heat the consumable article on the basis of the detected signal.

In an exemplary embodiment, in response to detection of a first signal, generated when the detectable element is in a first position in a consumable article received in the apparatus, the apparatus is configured to heat the consumable article; and in response to detection of a second signal, generated when the detectable element is in a second position in a consumable article received in the apparatus, different to the first position, the apparatus prevents heating of the consumable article.

In an exemplary embodiment, the sensor comprises a coil arranged to generate a magnetic field and to couple the magnetic field with the detectable element of an unused consumable article inserted into the apparatus.

In an exemplary embodiment, the controller is arranged to detect that the detectable element is in the first position based on a signal generated by the coil in response to an influence on the magnetic field by the detectable element.

In an exemplary embodiment, the coil is arranged to heat a susceptor material in the detectable element of a consumable article inserted in the apparatus.

In an exemplary embodiment, the apparatus is arranged to release the displaceable element of a consumable article, to displace the displaceable element from a first position to a second position, after a threshold period of time has elapsed following insertion of the consumable article in the apparatus and/or after a threshold number of puffs have been drawn from the consumable article.

In an exemplary embodiment, the apparatus comprises a memory arranged to store data indicative of a time elapsed following insertion of the consumable article in the apparatus and/or data indicative of a number of puffs have been drawn from the consumable article.

In an exemplary embodiment, the apparatus comprises a heating element arranged to volatilise at least one component of the aerosolisable material, wherein a detectable element in a consumable article received in the apparatus is heated by the heating element to release the detectable element to displace the displaceable element from a first position to a second position.

In an exemplary embodiment, the apparatus comprises an actuator arranged to release the detectable element such that the detectable element is displaced from a first position in the consumable article to a second position in the consumable article.

In an exemplary embodiment, the apparatus is arranged to prevent heating of the consumable article in the absence of a detection of the displaceable detectable element.

According to a third aspect of the present invention, there is provided a method of preventing heating of a consumable article for use with an apparatus arranged to heat aerosolisable material to volatilise at least one component of the aerosolisable material, the method comprising:
providing, in the consumable article, a displaceable detectable element, the detectable element being arranged in a first position prior to use of the consumable article wherein in the first position the apparatus is arranged to heat the consumable article; and
in response to use of the consumable article, displacing the detectable element to a second position in which the apparatus is arranged to prevent heating of the consumable article.

In an exemplary embodiment, the method comprises:
applying heat to the consumable article in response to detection of the detectable article; and
preventing application of heat to the consumable article in the absence of detection of the detectable element.

### Brief Description of the Drawings

Embodiments of the invention will now be described, by way of example only, with reference to the accompanying drawings, in which:
Figure 1a shows a schematic cross-sectional view of an example of an apparatus for heating an aerosolisable material to volatise at least one component of the aerosolisable material;
Figure 1b shows a schematic cross-sectional view of an example of an apparatus for heating an aerosolisable material with a consumable article inserted in the apparatus;
Figure 2 shows a schematic cross-sectional view of a consumable article;
Figure 3a shows a schematic cross-sectional view of an activation element of a consumable article in which a detectable element is in a first position;
Figure 3b shows a schematic cross-sectional view of an activation element of a consumable article in which a detectable element is in a second position;
Figure 4a shows a schematic cross-sectional view of an activation element of a consumable article in which a detectable element is in a first position;
Figure 4b shows a schematic cross-sectional view of an activation element of a consumable article in which a detectable element is in a second position; and
Figure 5 shows a flow diagram illustrating a method of preventing heating of a consumable article.

### Detailed Description

Apparatus is known that heats aerosolisable material to volatilise at least one component of the aerosolisable material, typically to form an aerosol which can be inhaled, without burning or combusting the aerosolisable material. Such apparatus is sometimes described as a "heat-not-burn" apparatus or a "tobacco heating product" or "tobacco heating device" or similar. Similarly, there are also so-called e-cigarette devices, which typically vaporise an aerosolisable material in the form of a liquid, which may or may not contain nicotine. The aerosolisable material may be in the form of or provided as part of a rod, cartridge or cassette or the like which can be inserted into the apparatus. A heating material for heating and volatilising the aerosolisable material may be provided as a "permanent" part of the apparatus or may be provided as part of the consumable article which is discarded and replaced after use. A "consumable article" in this context is a device or article or other component that includes or contains in use the aerosolisable material, which in use is heated to volatilise the aerosolisable material.

As used herein, the term "aerosolisable material" includes materials that provide volatilised components upon heating, typically in the form of vapour or an aerosol. "Aerosolisable material" may be a non-tobacco-containing material or a tobacco-containing material. "Aerosolisable material" may, for example, include one or more of tobacco per se, tobacco derivatives, expanded tobacco, reconstituted tobacco, tobacco extract, homogenised tobacco or tobacco substitutes. The aerosolisable material can be in the form of ground tobacco, cut rag tobacco, extruded tobacco, reconstituted tobacco, reconstituted aerosolisable material, liquid, gel, gelled sheet, powder, or agglomerates, or the like. "Aerosolisable material" also may include other, non-tobacco products, which, depending on the product, may or may not contain nicotine. "Aerosolisable material" may comprise one or more humectants, such as glycerol or propylene glycol.

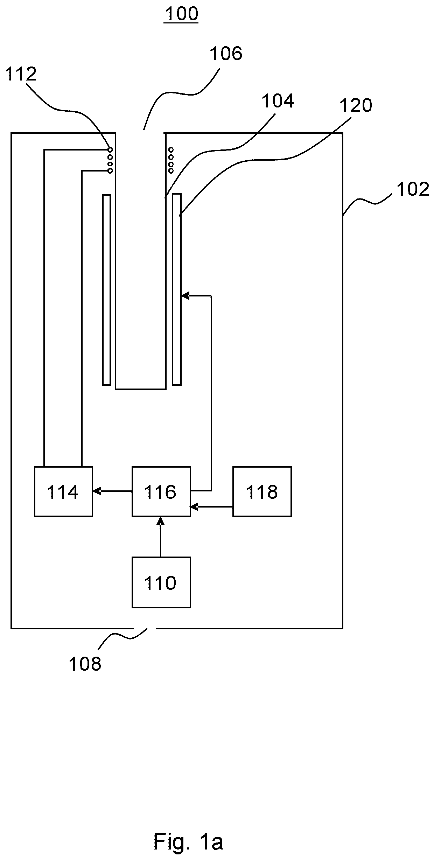

Referring to Figure 1a, there is shown a schematic cross-sectional view of an example of apparatus 100 according to an embodiment of the invention. The apparatus 100 is for heating aerosolisable material to volatilise at least one component of the aerosolisable material.

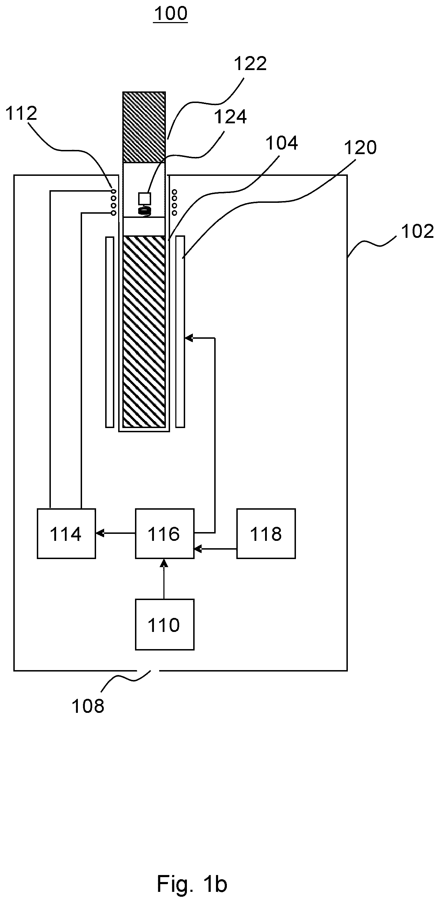

The apparatus 100 comprises an apparatus housing 102, referred to hereinafter as a body 102. The body 102 comprises a heating zone 104 for receiving at least a portion of a consumable article (not shown in Figure 1) comprising aerosolisable material that is to be heated. The apparatus 100 has an outlet 106 to permit volatilised components of the aerosolisable material to pass from the heating zone 104 towards an exterior of the apparatus 100 when, in use, the article is heated in the heating zone 104. In order to permit air to enter the apparatus 100 and be drawn through a consumable article inserted into the apparatus 100, the apparatus 100 may comprise one or more air inlets 108 located at a surface of the body 102, that are fluidically connected to a distal end of the heating zone 104. A user may be able to inhale the volatilised component(s) of the aerosolisable material by drawing the volatilised component(s) from the consumable article. As the volatilised component(s) are removed from the consumable article, air may be drawn into the heating zone 104 via the air inlet 108 of the apparatus 100.

In this embodiment, the heating zone 104 comprises a recess or cavity for receiving at least a portion of the consumable article. In other embodiments, the heating zone 104 may be other than a recess, such as a shelf, a surface, or a projection, and may require mechanical mating with the consumable article in order to co-operate with, or receive, the consumable article. In this embodiment, the heating zone 104 is elongate, and is sized and shaped to accommodate a portion of the consumable article such that a further portion of the consumable article protrudes from the body 102. In other embodiments, the heating zone 104 may be dimensioned to receive the whole of the consumable article.

The apparatus 100 comprises an electrical power source 110, a coil 112, a device 114 for passing a varying electrical current, such as an alternating current, through the coil 112, a controller 116, a user interface 118 for user-operation of the controller 116, and a heater 120.

The electrical power source 110 of this embodiment is a rechargeable battery. In other embodiments, the electrical power source 110 may be other than a rechargeable battery, such as a non-rechargeable battery, a capacitor, a battery-capacitor hybrid, or a connection to a mains electricity supply.

The electrical power source 110 is electrically coupled to the heater 120 to supply electrical power when required and under control of the controller 116 to heat the aerosolisable material (as described above, to volatilise the aerosolisable material without causing the aerosolisable material to burn). The electrical power source 110 is also electrically coupled, via the controller 116, to the device 114 for passing a varying electrical current through the coil 112 under the control of the controller 116.

As described below with reference to Figure 1b, in use, a consumable article is inserted into the heating zone 104. In this embodiment, the heater 120 is generally in the form of a hollow cylindrical tube, having a hollow interior heating chamber into which aerosolisable material is inserted for heating in use. Different arrangements for the heater 120 are possible. For example, the heater 120 may be formed of a single heating element or may be formed of plural heating elements aligned along the longitudinal axis of the heater 120. The or each heating element may be annular or tubular, or at least part-annular or part-tubular around its circumference. In an example, the or each heating element may be a thin film heater. In another example, the or each heating element may be made of a ceramics material. Examples of suitable ceramics materials include alumina and aluminium nitride and silicon nitride ceramics, which may be laminated and sintered. Other heating arrangements are possible, including for example inductive heating, infrared heater elements, which heat by emitting infrared radiation, or resistive heating elements formed by for example a resistive electrical winding. In one particular example, the heater 120 is formed of a polyimide substrate on which is formed one or more heating elements, and which is supported by a stainless steel support tube. The heater 120 is dimensioned so that substantially the whole of the aerosolisable material when inserted is located within the heating element(s) of the heater 20 so that substantially the whole of the aerosolisable material is heated in use. The or each heating element may be arranged so that selected zones of the aerosolisable material can be independently heated, for example in turn (over time) or together (simultaneously) as desired.

In some embodiments, the heater 120 may be surrounded along at least part of its length by a thermal insulator to help to reduce heat passing from the heater 120 to the exterior of the apparatus 100. This helps to keep down the power requirements for the heater 120 as it reduces heat losses generally. The insulator may also help to keep the exterior of the apparatus 100 cool during operation of the heater 120. In one example, the insulator may be a double-walled sleeve which provides a low-pressure region between the two walls of the sleeve. That is, the insulator may be for example a "vacuum" tube, i.e. a tube that has been at least partially evacuated so as to minimise heat transfer by conduction and/or convection. Other arrangements for the insulator are possible, including using heat insulating materials, including for example a suitable foam-type material, in addition to or instead of a double-walled sleeve.

The coil 112 may take any suitable form. The coil 112 is sometimes referred to as a work coil. In this embodiment, the coil 112 is a helical coil of electrically-conductive material, such as copper. The coil 112 extends along a longitudinal axis that is substantially aligned with a longitudinal axis of the heating zone 104.

The device 114 for passing a varying current through the coil 112 is electrically connected between the electrical power source 110 and the coil 112. The controller 116 also is electrically connected to the electrical power source 110, and is communicatively connected to the device 114 to control the device 114. More specifically, the controller 116 is for controlling the device 114, so as to control the supply of electrical power from the electrical power source 110 to the coil 112 and to determine a presence or otherwise of a detectable element in a consumable article on the basis of a measured property of the coil 112 or a signal generated by and/or returned from the coil 112 in response to an influence on the magnetic field by the detectable element. The controller 116 may, for example, comprise an integrated circuit (IC), such as an IC on a printed circuit board (PCB). In some embodiments, the apparatus 100 may have a single electrical or electronic component comprising the device 114 and the controller 116.

The controller 116 is arranged to control a supply of electrical power from the electrical power source 110 to the heater 120 based on a determination of whether a detectable element in a consumable article is detected to be in a predetermined position.

In use, the controller 116 is operated by user-operation of the user interface 118. The user interface 118 is located at the exterior of the body 102. The user interface 118 may, for example, comprise a push-button, a toggle switch, a dial, a touchscreen, or the like. In other implementations, the controller 116 may be configured to operate in response to a detectable condition, detected via a suitable sensor, such as when a user inhales on the apparatus 100.

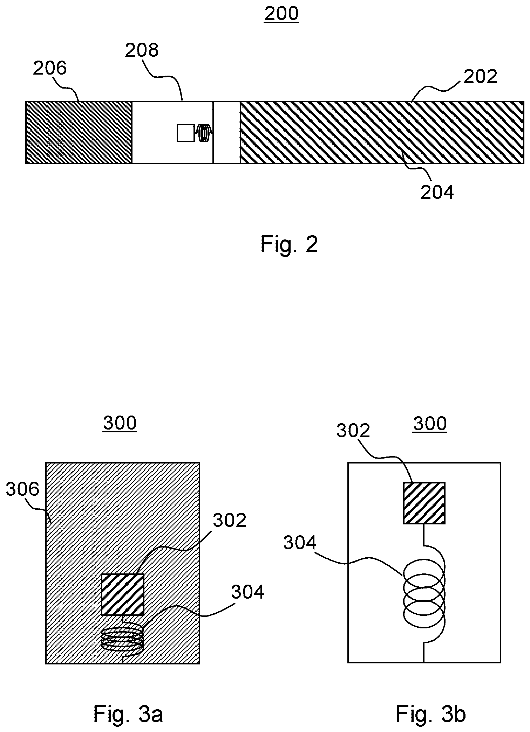

When an unused consumable article is inserted into the apparatus 100, the controller 116 is able to detect a displaceable detectable element in the consumable article is in a predetermined position. Upon detection of the detectable element in the predetermined position, operation of the user interface 118 by a user or detection of a user inhaling on the apparatus, causes the controller 116 to cause the power to be supplied from the power supply 110 to the heater 120. However, use of the consumable article causes the detectable element to be displaced from the predetermined position (i.e. from first position to a second position). If a used consumable article is subsequently inserted into the apparatus 100 (or another similar apparatus), the controller 116 does not detect that the detectable element is in the predetermined position or is unable to detect a detectable element in the consumable article at all. In such circumstances, the controller 116 may be configured to prevent heating of the consumable article, and/or may perform certain other actions such as providing a signal/warning to the user. For example, if the apparatus 100 receives a consumable article has been used such that, as described below with reference to Figures 3a to 4b, the detectable element has been displaced, the controller 116 may detect that the detectable element is displaced, or may detect that there is no detectable element, and will accordingly prevent power being supplied to the heater 120. Similarly, if an incompatible consumable article (i.e. that does not include a detectable element) is inserted into the apparatus 100, the controller 116 will not detect the presence of a detectable element and will accordingly prevent power being supplied to the heater 120.

In some embodiments, the apparatus 100 may comprise a temperature sensor for sensing a temperature of the heating zone 104. The temperature sensor may be communicatively connected to the controller 116, so that the controller 116 is able to monitor the temperature of the heating zone 104. On the basis of one or more signals received from the temperature sensor 120, the controller 116 may cause the device 114 to adjust a characteristic of the power supplied to the heater 120 as necessary, in order to ensure that the temperature of the heating zone 104 remains within a predetermined temperature range. Within the predetermined temperature range, in use the aerosolisable material within a consumable article located in the heating zone 104 is heated sufficiently to volatilise at least one component of the aerosolisable material without combusting the aerosolisable material. Accordingly, the controller 116, and the apparatus 100 as a whole, is arranged to heat the aerosolisable material to volatilise the at least one component of the aerosolisable material without combusting the aerosolisable material. In some embodiments, the temperature range is about 50°C to about 300°C, such as between about 50°C and about 250°C, between about 60°C and about 240°C, between about 70°C and about 230°C, between about 80°C and about 220°C, between about 90°C and about 210°C, or between about 100°C and about 200°C. In some embodiments, the temperature range is between about 170°C and about 220°C. In other embodiments, the temperature range may be other than this range. In some embodiments, the upper limit of the temperature range could be greater than 300°C. In some embodiments, the temperature sensor may be omitted. In some embodiments, the heating material may have a Curie point temperature selected on the basis of the maximum temperature to which it is desired to heat the heating material, so that further heating above that temperature by induction heating the heating material is hindered or prevented.

As shown in Figure 1b, there is shown a schematic cross-sectional view of an example of apparatus 100 with a consumable article 122 inserted into the apparatus 100. As shown in Figure 1b, when the consumable article 122 is inserted into the apparatus 100, a detectable element 124 in the consumable article 122 aligns with the coil 112, which acts as a sensor for detecting the detectable element 124. The coil 112 may be provided with a predetermined electrical current or voltage. When the detectable element 124 is aligned with the coil 112, inductive coupling may occur between the detectable element 124 and the coil 112, which manifests itself as a variation on the predetermined electrical current or voltage. The apparatus 100 is arranged to detect the presence or otherwise of the detectable element 124 in a predetermined position in the consumable article 122, and to allow heating of the consumable article 122 on the basis of the detection (i.e. on the basis of an output from the sensor). For example, in response to detecting the presence of the detectable element 122, the controller 116 of the apparatus 100 may, in response to an appropriate input received at the user interface 118, provide power to the heater 120 and, in the absence of a detection of the detectable element in a predetermined position, to prevent heating of the consumable article (by preventing power being supplied to the heater 120.

Referring to Figure 2, there is shown an apparatus which is a consumable article 200 for use with an apparatus arranged to heat aerosolisable material to volatilise at least one component of the aerosolisable material, such as the apparatus 100 described above with reference to Figure 1, according to an embodiment of the invention.

The consumable article 200 may be provided with a substrate 202 comprising aerosolisable material. For example, the substrate 202 may comprise, tobacco, tobacco derivatives, expanded tobacco, reconstituted tobacco, tobacco extract, homogenised tobacco or tobacco substitutes may be located within a shell 204, as described above. Alternatively, the substrate 202 may comprise non-tobacco products, which, depending on the product, may or may not contain nicotine. The shell 204 may be formed of a substrate material, such as a paper material or a cardboard material, for example.

In the embodiment shown in Figure 2, the consumable article 200 comprises a filter portion 206. For example, the filter portion 206 may comprise filtering material such as cellulose acetate fibre. The filter portion 206 may, in use, act as a mouthpiece for the consumable article 200, through which air containing volatilised components from the aerosolisable material may be drawn. At the opposite end of the consumable article 200 from the filter portion, at what is sometimes referred to as a distal end, there is an opening into which air can be drawn to then be drawn through the consumable article 200.

In other embodiments, the filter portion 206 may be omitted. For example, in some embodiments, the consumable article 200 may be contained entirely within an apparatus and the apparatus may be provided with a mouthpiece via which a user may draw air containing volatilised components from the aerosolisable material.

The consumable article 200 comprises an activation element 208 which, as described below with reference to Figures 3a to 4b comprises a detectable element that is displaceable from a first position to a second position. The activation element 208 is supplied (i.e. in an unused state) with the detectable element in the first position. **In** the first position, the detectable element of the activation element 208 is detectable by the apparatus to enable the apparatus to heat the consumable article 200. In the second position, the detectable element of the activation element 208 is displaced so that the apparatus detects that the consumable is used or so that the detectable element is undetectable by the apparatus thereby preventing heating of the consumable article 200.

In some embodiments, the consumable article 200 may comprise an integral heating element to heat aerosolisable material in the substrate 204 to volatilise at least one component of the aerosolisable material, rather than being heated directly by a heating element within the apparatus in which it is used.

Referring to Figures 3a and 3b, there are shown schematic cross-sectional views of an activation element 300, which may be used as the activation element in a consumable article such as activation element 208 in the consumable article 200 disclosed above with reference to Figure 2.

The activation element 300 comprises a displaceable detectable element 302 and a displacement mechanism, which in the embodiment shown comprises a spring 304. The activation element 300 also comprises a holding mechanism for holding the detectable element 302 in the first position.

Figure 3a shows the activation element 300 with the displaceable detectable element 302 in a first position, corresponding to a position in which it would be prior to use of the consumable article 200. Figure 3b shows the activation element 300 with the displaceable detectable element 302 in a second, displaced, position corresponding to a position in which it would be after use of the consumable article 200.

As shown in Figure 3a, when the consumable article 200 is in an unused state, the detectable element 302 is in the first position with the spring 304 in a pre-tensioned state. In this embodiment, the holding mechanism for holding the detectable element 302 and the spring 304 in place (i.e. with the detectable element in the first position and the spring pre-tensioned) comprises a holding material 306 that, in response to being heated, enables the detectable element 302 to be displaced from the first position to the second position. For example, the holding material may be a wax seal that when heated softens or melts thereby enabling the detectable element 302 to be displaced from the first position to the second position under the influence of the spring 304. In other embodiments, the holding material 306 may be a plastics material or any other material which may soften or melt in response to application of heat at an appropriate temperature.

After insertion of the consumable article 200 into the apparatus 100 and use of the consumable article 200 (i.e. heating of the consumable article 200 to heat the aerosolisable material), the detectable element 302 may be displaced to the second position as shown in Figure 3b.

In the embodiment shown in Figure 3b, upon, after or during use of the consumable article 200, the holding material 306 is softened or melted. Once the holding material 306 has softened or melted sufficiently, the tension in the spring 304 forces the detectable element 302 to be displaced from the first position, in which it can be detected by the controller 116 of the apparatus 100 to enable the controller 116 to heat the consumable article 200, to the second position. As the detectable element 302 cannot be returned to the first position since it is held in the second position by the spring 304, if the consumable article 200 is subsequently reinserted into the apparatus 100, or is inserted into a different apparatus 100, the controller 116 of the apparatus 100 will detect that the detectable element 302 is not in the first position, or will be unable to detect the detectable element 302, and will not enable power to be supplied to the heater 120, thereby preventing further heating of the consumable article 200.

In the embodiment shown in Figures 3a and 3b, the detectable element 302 is a heating material, sometimes referred to as a susceptor material, that is heatable by penetration of with a varying magnetic field, such as the field generated by the coil 112 of the apparatus 100. In the embodiment shown in Figures 3a and 3b, the detectable element 302 responds to the penetrating magnetic field by heating the holding material 306 to soften or melt the holding material 306. Once the holding material 306 has softened or melted sufficiently, the detectable element 302 is able to be displaced, under the action of the spring 304, from the first position to the second position. An impedance of the coil 112 of the apparatus 100 may be equal, or substantially equal, to an impedance of the detectable element 302.

Induction heating is a process in which an electrically-conductive object is heated by penetrating the object with a varying magnetic field. The process is described by Faraday's law of induction and Ohm's law. An induction heater may comprise an electromagnet and a device for passing a varying electrical current, such as an alternating current, through the electromagnet. When the electromagnet and the object to be heated are suitably relatively positioned so that the resultant varying magnetic field produced by the electromagnet penetrates the object, one or more eddy currents are generated inside the object. The object has a resistance to the flow of electrical currents. Therefore, when such eddy currents are generated in the object, their flow against the electrical resistance of the object causes the object to be heated. An object that is capable of being inductively heated is known as a susceptor.

In some embodiments, heating of the detectable element 302 of an unused consumable article 200 begins as soon as the consumable article 200 is inserted into the apparatus 100 and a user uses the apparatus 100 to heat the consumable article 200 (for example, by input applied to the user interface 118). In such embodiments, the controller 116 may be arranged to initially detect the presence of the detectable element 302 in the first position and, for example, permit heating of the consumable article 200 for a predetermined time following the initial detection, or for a predetermined number of "puffs". The apparatus 100 and/or the consumable article 200 may include a storage device (i.e. a memory device) arranged to store data indicative of a time elapsed following insertion of the consumable article in the apparatus and/or data indicative of a number of puffs have been drawn from the consumable article 200. At the end of a use session (i.e. after a certain number of puffs have been taken, or after a certain amount of time since activation has elapsed), the controller 116 may be arranged to prevent further heating of the consumable article 200. For example, based on data stored in the apparatus 100 or the consumable article 200, the controller 116 may determine that the consumable article 200 is used.

In other embodiments, a heat capacity of the holding material 306, and the dimensions of the holding material 306, may be designed such that the integrity of the holding material 306 is maintained for a predetermined amount of heating time, after which the holding material 306 softens or melts to a degree that allows the detectable element 302 to be displaced to the second position. In such embodiments, the controller 116 may be arranged to continually monitor for the presence of the detectable element 302 in the first position and permit heating of the consumable article 200 only while the controller 116 detects the presence of the detectable element 302 in the first position.

In some embodiments, the detectable element 302 may not provide any heating of the holding material 306. For example, heating and softening or melting of the holding material 306 may instead be provided by heat from the flow of gases passing through the consumable article 100 or from the conduction of heat along the consumable article 200 (i.e. indirectly from the heat generated by the heater 120 that is used to volatilise a component of the aerosolisable material). Alternatively, the activation element 300 may be provided with a heating element, separate from the detectable element 302, which may be heated by inductive or resistive heating.

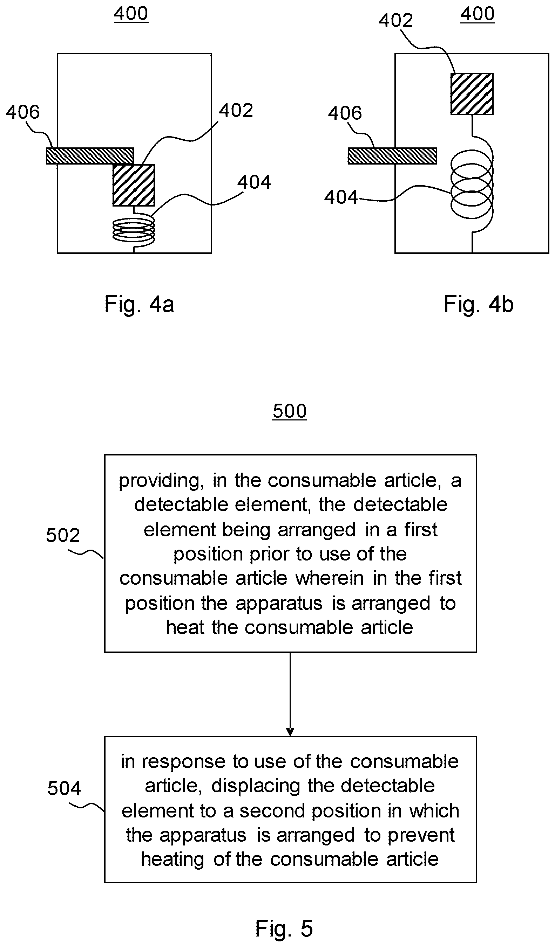

Referring to Figures 4a and 4b, there are shown schematic cross-sectional views of an activation element 400, which may be used as the activation element in a consumable article such as activation element 208 in the consumable article 200 disclosed above with reference to Figure 2.

Similar to the activation element 300 disclosed above with reference to Figures 3a and 3b, the activation element 400 shown in Figures 4a and 4b comprises a displaceable detectable element 402 and a displacement device, which in the embodiment shown comprises a spring 404. The activation element 400 also comprises a holding mechanism for holding the detectable element 402 in the first position.

Figure 4a shows the activation element 400 with the displaceable detectable element 402 in a first position, corresponding to a position in which it would be prior to use of the consumable article 200. Figure 4b shows the activation element 400 with the displaceable detectable element 402 in a second, displaced, position corresponding to a position in which it would be after use of the consumable article 200.

As shown in Figure 4a, when the consumable article 200 is in an unused state, the detectable element 402 is in the first position with the spring 404 in a pre-tensioned state. The holding mechanism for holding the detectable element 402 and the spring 404 in place with the detectable element in the first position and the spring pre-tensioned is a mechanical lock 406.

After insertion of the consumable article 200 into the apparatus 100, the mechanical lock 406 may be triggered to release the tension in the spring 404 so that the detectable element 402 may be displaced to the second position as shown in Figure 4b. For example, the apparatus 100 may comprise an actuator arranged to engage with and release the lock upon insertion of the consumable article 200 into the apparatus 100 to allow the detectable element 402 to be displaced to the second position.

Once the mechanical lock 406 has been released, the tension in the spring 404 forces the detectable element 402 to be displaced from the first position, in which it can be detected by the controller 116 of the apparatus 100 to enable the controller 116 to heat the consumable article 200, to the second position. As the detectable element 402 cannot be returned to the first position since it is held in the second position by the spring 404, if the consumable article 200 is subsequently reinserted into the apparatus 100, or is inserted into a different apparatus 100, the controller 116 of the apparatus 100 will detect that the detectable element 302 is not in the first position, or will be unable to detect the detectable element 402, and will not enable power to be supplied to the heater 120, thereby preventing further heating of the consumable article 200.

Referring to Figure 5, there is shown a method 500 of preventing heating of a consumable article, such as the consumable article 200 described above with reference to Figure 2.

At block 502, a displaceable detectable element, such as the detectable elements 300, 400 described above with reference to Figures 3a to 4b, is provided in the consumable article. The detectable element is arranged in a first position prior to use of the consumable article, in which the apparatus is arranged to heat the consumable article.

At block 504, in response to use of the consumable article, the detectable element is displaced to a second position in which the apparatus is arranged to prevent heating of the consumable article.

Although in the embodiments described above with reference to Figures 1 to 5, heating of the aerosolisable material to volatilise at least one component of the aerosolisable material is provided by a resistive heating arrangement provided within the apparatus, in some embodiments heating may be provided by other heating arrangements instead of or in addition to a resistive heater in the apparatus. For example, the consumable article may be provided with a resistive heating arrangement instead of, or in addition to a resistive heater provided in the apparatus. Alternatively, an inductive heating arrangement may be provided within the consumable article that is heated by an induction coil provided within the apparatus. In other examples, the apparatus arranged to heat aerosolisable material may comprise a heating arrangement to heat the aerosolisable material by radiative heating (i.e. by infrared radiation).

Although the embodiments disclosed above are described with reference to a heat-not-burn device that heats a tobacco containing consumable article, in some embodiments the apparatus may be an electronic cigarette (e-cigarette) and the consumable article may be a container arranged to contain, for example, an aerosolisable liquid which may be heated to volatise one or more components of the aerosolisable liquid. For example, the consumable article may be a cartomizer cartridge for use with an e-cigarette.

The various embodiments described herein are presented only to assist in understanding and teaching the claimed features. These embodiments are provided as a representative sample of embodiments only and are not exhaustive and/or exclusive. It is to be understood that advantages, embodiments, examples, functions, features, structures, and/or other aspects described herein are not to be considered limitations on the scope of the invention as defined by the claims and that other embodiments may be utilised, and modifications may be made without departing from the scope of the claimed invention. In addition, this disclosure may include other inventions not presently claimed, but which may be claimed in future.

## Claims

1. A consumable article (200) for use with an apparatus (100) arranged to heat aerosolisable material (202) to volatilise at least one component of the aerosolisable material, the consumable article comprising a detectable element (302), the detectable element being arranged in a first position prior to use of the consumable article and displaceable to a second position after use of the consumable article, wherein in the first position the detectable element is detectable by the apparatus to enable the apparatus to heat the consumable article, wherein use of the consumable article causes the detectable element to be displaced from the first position to the second position.

2. A consumable article according to claim 1, comprising a displacement mechanism (304) for displacing the detectable element from the first position to the second position.

3. A consumable article according to claim 2, wherein the displacement mechanism comprises a spring, the spring being pre-tensioned with the detectable element in the first position prior to use of the consumable article and arranged to displace the detectable element to the second position after use of the consumable article.

4. A consumable article according to any one of claim 1 to claim 3, comprising a holding mechanism for holding the detectable element in the first position.

5. A consumable article according to claim 4, wherein the holding mechanism comprises a holding material (306) that, in response to being heated, enables the detectable element to be displaced from the first position to the second position.

6. A consumable article according to any preceding claim, comprising a memory arranged to store data indicative of a time elapsed following a first use of the consumable article in an apparatus and/or data indicative of a number of puffs have been drawn from the consumable article.

7. A system comprising an apparatus (100) arranged to heat the aerosolisable material (202) in the consumable article of any one of claims 1 to 6 to volatilise at least one component of the aerosolisable material, the system also comprising the consumable article (200), the apparatus being arranged to:
receive the consumable article comprising the aerosolisable material;
detect the displaceable detectable element (302) in the consumable article is in the first position; and
heat the consumable article based on the detection of the consumable article in the first position.

8. The system according to claim 7, wherein the apparatus comprises:
a sensor (112) arranged to detect a signal from the detectable element; and
a controller (116) arranged to apply power to a heater element to heat the consumable article on the basis of the detected signal.

9. The system according to claim 7 or claim 8, wherein:
in the first position the apparatus detects a first signal from the displaceable detectable element and, in response to detection of the first signal, the apparatus is configured to heat the consumable article; and
in the second position the apparatus detects a second signal different to the first signal and, in response to detection of the second signal, the apparatus prevents heating of the consumable article.

10. The system according to claim 8 or claim 9, wherein the sensor comprises a coil arranged to generate a magnetic field and to couple the magnetic field with the detectable element of an unused consumable article inserted into the apparatus.

11. The system according to any one of claim 7 to claim 10, wherein the apparatus is arranged to release the displaceable element of a consumable article, to displace the displaceable element from the first position to the second position, after a threshold period of time has elapsed following insertion of the consumable article in the apparatus and/or after a threshold number of puffs have been drawn from the consumable article.

12. The system according to any one of claim 7 to claim 11, wherein the apparatus comprises a heating element (120) arranged to volatilise at least one component of the aerosolisable material, wherein a detectable element in a consumable article received in the apparatus is heated by the heating element to release the detectable element to displace the displaceable element from the first position to the second position.

13. The system according to any one of claim 7 to claim 12, wherein the apparatus is arranged to prevent heating of the consumable article in the absence of a detection of the displaceable detectable element.

14. A method of preventing heating of a consumable article (200) for use with an apparatus (100) arranged to heat aerosolisable material to volatilise at least one component of the aerosolisable material (202), the method comprising:
providing, in the consumable article, a displaceable detectable element (302), the detectable element being arranged in a first position prior to use of the consumable article wherein in the first position the apparatus is arranged to heat the consumable article; and
in response to use of the consumable article, displacing the detectable element to a second position in which the apparatus is arranged to prevent heating of the consumable article.

15. A method according to claim 14, comprising:
applying heat to the consumable article in response to detection of the detectable article; and
preventing application of heat to the consumable article in the absence of detection of the detectable element.

## Patentansprüche

1. Verbrauchsgegenstand (200) zur Verwendung mit einer Einrichtung (100), die angeordnet ist, aerosolisierbares Material (202) zu erwärmen, um mindestens eine Komponente des aerosolisierbaren Materials zu verflüchtigen, wobei der Verbrauchsgegenstand ein erkennbares Element (302) umfasst, wobei das erkennbare Element vor Verwendung des Verbrauchsgegenstands in einer ersten Position angeordnet ist und nach Verwendung des Verbrauchsgegenstands in eine zweite Position verschoben werden kann, wobei in der ersten Position das erkennbare Element durch die Einrichtung erkennbar ist, damit die Einrichtung den Verbrauchsgegenstand erwärmen kann, wobei die Verwendung des Verbrauchsgegenstands bewirkt, dass das erkennbare Element von der ersten Position in die zweite Position verschoben wird.

2. Verbrauchsgegenstand nach Anspruch 1, umfassend einen Verschiebungsmechanismus (304) zum Verschieben des erkennbaren Elements von der ersten Position in die zweite Position.

3. Verbrauchsgegenstand nach Anspruch 2, wobei der Verschiebungsmechanismus eine Feder umfasst, wobei die Feder vor Verwendung des Verbrauchsgegenstands mit dem erkennbaren Element in der ersten Position vorgespannt ist und so angeordnet ist, dass sie das erkennbare Element nach Verwendung des Verbrauchsgegenstands in die zweite Position verschiebt.

4. Verbrauchsgegenstand nach einem der Ansprüche 1 bis 3, umfassend einen Haltemechanismus zum Halten des erkennbaren Elements in der ersten Position.

5. Verbrauchsgegenstand nach Anspruch 4, wobei der Haltemechanismus ein Haltematerial (306) umfasst, das als Reaktion auf eine Erwärmung eine Verschiebung des erkennbaren Elements von der ersten Position in die zweite Position ermöglicht.

6. Verbrauchsgegenstand nach einem der vorstehenden Ansprüche, umfassend einen Speicher, der so angeordnet ist, dass er Daten, die eine seit einer ersten Verwendung des Verbrauchsgegenstands in einer Einrichtung verstrichene Zeit angeben, und/oder Daten, die eine Anzahl von aus dem Verbrauchsgegenstand entnommenen Züge angeben, speichert.

7. System, umfassend eine Einrichtung (100), die dazu angeordnet ist, das aerosolisierbare Material (202) in dem Verbrauchsgegenstand nach einem der Ansprüche 1 bis 6 zu erwärmen, um mindestens eine Komponente des aerosolisierbaren Materials zu verflüchtigen, wobei das System auch den Verbrauchsgegenstand (200) umfasst, und die Einrichtung angeordnet ist zum:
Aufnehmen des Verbrauchsgegenstands, umfassend das aerosolisierbare Material;
Erkennen, dass das verschiebbare erkennbare Element (302) in dem Verbrauchsgegenstand in der ersten Position ist; und
Erwärmen des Verbrauchsgegenstands auf der Grundlage der Erkennung des Verbrauchsgegenstands in der ersten Position.

8. System nach Anspruch 7, wobei die Einrichtung umfasst:
einen Sensor (112), der so angeordnet ist, dass er ein Signal von dem erkennbaren Element erkennt; und
eine Steuereinheit (116), die so angeordnet ist, dass sie auf der Grundlage des erkanntes Signals Strom an ein Erwärmungselement anlegt, um den Verbrauchsgegenstand zu erwärmen.

9. System nach Anspruch 7 oder Anspruch 8, wobei:
in der ersten Position die Einrichtung ein erstes Signal von dem verschiebbaren erkennbaren Element erkennt, und als Reaktion auf eine Erkennung des ersten Signals die Einrichtung so ausgebildet ist, dass sie den Verbrauchsgegenstand erwärmt; und
in der zweiten Position die Einrichtung ein zweites Signal erkennt, das sich vom ersten Signal unterscheidet, und als Reaktion auf eine Erkennung des zweiten Signals die Einrichtung eine Erwärmung des Verbrauchsgegenstands verhindert.

10. System nach Anspruch 8 oder Anspruch 9, wobei der Sensor eine Spule umfasst, die so angeordnet ist, dass sie ein Magnetfeld erzeugt und das Magnetfeld mit dem erkennbaren Element eines unbenutzten Verbrauchsgegenstands koppelt, das in die Einrichtung eingeführt ist.

11. System nach einem von Anspruch 7 bis Anspruch 10, wobei die Einrichtung so angeordnet ist, dass sie das verschiebbare Element eines Verbrauchsgegenstands freigibt, um das verschiebbare Element von der ersten Position in die zweite Position zu verschieben, nachdem eine Schwellenzeit nach Einführen des Verbrauchsgegenstands in die Einrichtung und/oder nachdem eine Schwellenanzahl von Zügen aus dem Verbrauchsgegenstand genommen wurde, verstrichen ist.

12. System nach einem von Anspruch 7 bis Anspruch 11, wobei die Einrichtung ein Erwärmungselement (120) umfasst, das so angeordnet ist, dass es mindestens eine Komponente des aerosolisierbaren Materials verdampft, wobei ein erkennbares Element in einem in der Einrichtung aufgenommenen Verbrauchsgegenstand durch das Erwärmungselement erwärmt wird, um das erkennbare Element freizugeben und das verschiebbare Element von der ersten Position in die zweite Position zu verschieben.

13. System nach einem von Anspruch 7 bis Anspruch 12, wobei die Einrichtung so angeordnet ist, dass sie eine Erwärmung des Verbrauchsgegenstands bei der Abwesenheit einer Erkennung des verschiebbaren erkennbaren Elements verhindert.

14. Verfahren zum Verhindern einer Erwärmung eines Verbrauchsgegenstands (200) zur Verwendung mit einer Einrichtung (100), die dazu angeordnet ist, aerosolisierbares Material zu erwärmen, um mindestens eine Komponente des aerosolisierbaren Materials (202) zu verflüchtigen, wobei das Verfahren umfasst:
Bereitstellen eines verschiebbaren erkennbaren Elements (302) in dem Verbrauchsgegenstand, wobei das erkennbare Element vor Verwendung des Verbrauchsgegenstands in einer ersten Position angeordnet ist, in der die Einrichtung so angeordnet ist, dass sie den Verbrauchsgegenstand erwärmt; und
als Reaktion auf eine Verwendung des Verbrauchsgegenstands Verschieben des erkennbaren Elements in eine zweite Position, in der die Einrichtung so angeordnet ist, dass eine Erwärmung des Verbrauchsgegenstands verhindert wird.

15. Verfahren nach Anspruch 14, umfassend:
Anwenden von Wärme auf den Verbrauchsgegenstand als Reaktion auf eine Erkennung des erkennbaren Gegenstands; und
Verhindern eines Anwendens von Wärme auf den Verbrauchsgegenstand bei der Abwesenheit einer Erkennung des erkennbaren Elements.

## Revendications

1. Article consommable (200) destiné à être utilisé avec un appareil (100) agencé pour chauffer un matériau aérosolisable (202) afin de volatiliser au moins un composant du matériau aérosolisable, l'article consommable comprenant un élément détectable (302), l'élément détectable étant disposé dans une première position avant l'utilisation de l'article consommable et pouvant être déplacé vers une seconde position après utilisation de l'article consommable, dans lequel dans la première position, l'élément détectable est détectable par l'appareil pour permettre à l'appareil de chauffer l'article consommable, dans lequel l'utilisation de l'article consommable provoque le déplacement de l'élément détectable de la première position vers la seconde position.

2. Article consommable selon la revendication 1, comprenant un mécanisme de déplacement (304) pour déplacer l'élément détectable de la première position à la deuxième position.

3. Article consommable selon la revendication 2, dans lequel le mécanisme de déplacement comprend un ressort, le ressort étant précontraint avec l'élément détectable dans la première position avant l'utilisation de l'article consommable et agencé pour déplacer l'élément détectable vers la deuxième position après utilisation de l'article consommable.

4. Article consommable selon l'une quelconque des revendications 1 à 3, comprenant un mécanisme de maintien pour maintenir l'élément détectable dans la première position.

5. Article consommable selon la revendication 4, dans lequel le mécanisme de maintien comprend un matériau de maintien (306) qui, en réponse à un chauffage, permet à l'élément détectable d'être déplacé de la première position à la deuxième position.

6. Article consommable selon l'une quelconque des revendications précédentes, comprenant une mémoire agencée pour stocker des données indicatives d'un temps écoulé après une première utilisation de l'article consommable dans un appareil et/ou des données indicatives d'un nombre de bouffées qui ont été tirées de l'article consommable.

7. Système comprenant un appareil (100) agencé pour chauffer le matériau aérosolisable (202) dans l'article consommable de l'une quelconque des revendications 1 à 6 afin de volatiliser au moins un composant du matériau aérosolisable, le système comprenant également l'article consommable (200), l'appareil étant agencé pour :
recevoir l'article consommable comprenant le matériau aérosolisable ;
détecter que l'élément déplaçable détectable (302) dans l'article consommable est dans la première position ; et
chauffer l'article consommable sur la base de la détection de l'article consommable dans la première position.

8. Système selon la revendication 7, dans lequel l'appareil comprend :
un capteur (112) agencé pour détecter un signal provenant de l'élément détectable ; et
un dispositif de commande (116) agencé pour appliquer une puissance à un élément chauffant afin de chauffer l'article consommable sur la base du signal détecté.

9. Système selon la revendication 7 ou la revendication 8, dans lequel :
dans la première position, l'appareil détecte un premier signal provenant de l'élément détectable déplaçable et, en réponse à la détection du premier signal, l'appareil est configuré pour chauffer l'article consommable ; et
dans la deuxième position, l'appareil détecte un deuxième signal différent du premier signal et, en réponse à la détection du deuxième signal, l'appareil empêche le chauffage de l'article consommable.

10. Système selon la revendication 8 ou la revendication 9, dans lequel le capteur comprend une bobine agencée pour générer un champ magnétique et pour coupler le champ magnétique à l'élément détectable d'un article consommable inutilisé inséré dans l'appareil.

11. Système selon l'une quelconque des revendications 7 à 10, dans lequel l'appareil est agencé pour libérer l'élément déplaçable d'un article consommable afin de déplacer l'élément déplaçable de la première position à la deuxième position, après qu'une période de temps seuil s'est écoulée suite à l'insertion de l'article consommable dans l'appareil et/ou après qu'un nombre seuil de bouffées a été tiré de l'article consommable.

12. Système selon l'une quelconque des revendications 7 à 11, dans lequel l'appareil comprend un élément chauffant (120) agencé pour volatiliser au moins un composant du matériau aérosolisable, dans lequel un élément détectable dans un article consommable reçu dans l'appareil est chauffé par l'élément chauffant pour libérer l'élément détectable afin de déplacer l'élément déplaçable de la première position à la deuxième position.

13. Système selon l'une quelconque des revendications 7 à 12, dans lequel l'appareil est agencé pour empêcher le chauffage de l'article consommable en l'absence de détection de l'élément détectable déplaçable.

14. Procédé pour empêcher le chauffage d'un article consommable (200) destiné à être utilisé avec un appareil (100) agencé pour chauffer un matériau aérosolisable afin de volatiliser au moins un composant du matériau aérosolisable (202), le procédé comprenant les étapes consistant à :
fournir, dans l'article consommable, un élément détectable déplaçable (302), l'élément détectable étant disposé dans une première position avant l'utilisation de l'article consommable, dans lequel, dans la première position, l'appareil est agencé pour chauffer l'article consommable ; et
en réponse à l'utilisation de l'article consommable, déplacer l'élément détectable vers une deuxième position dans laquelle l'appareil est agencé pour empêcher le chauffage de l'article consommable.

15. Procédé selon la revendication 14, comprenant :
l'application de chaleur à l'article consommable en réponse à la détection de l'article détectable ; et
l'empêchement de l'application de chaleur à l'article consommable en l'absence de détection de l'élément détectable.
